# EUROPEAN PATENT SPECIFICATION

(11) **EP 2 708 131 B1**
(45) Date of publication and mention of the grant of the patent: **12.04.2017**
(21) Application number: 13184724.6
(22) Date of filing: 17.09.2013
(51) Int. Cl.: A21C 3/02, A21C 3/04

(54) **Apparatus for extruding dough**
Vorrichtung zum Extrudieren von Teig
Appareil d'extrusion de pâte

(30) Priority: 17.09.2012 IT VR20120188
(43) Date of publication of application: 19.03.2014
(73) Proprietor: RONDO SCHIO S.R.L., 36015 SCHIO (VI) (IT)
(72) Inventor: Scalzeri, Andrea, 36010 ROANA, FRAZ. CAMPOROVERE VI (IT)
(74) Representative: Modiano, Micaela Nadia

(56) References cited:
- WO-A1-01/08497
- WO-A1-97/26792
- GB-A- 1 006 112
- US-A- 2 687 698
- US-A- 4 666 726
- US-A- 5 824 349

## Description

The present invention relates to an apparatus for extruding dough such as bread dough, leavened dough, dough for pizzas, croissants and the like, flaky pastries such as biscuit pastry, flaky-pastry biscuits and the like, dough not intended for baking, such as lasagna dough, ravioli, with and without eggs.

Dough extruders constituted by a hopper with a plurality of pairs of extraction rollers arranged below it, followed by a train of laminating rollers, are known and widely used.

In many cases, the laminating rollers, in forming the continuous sheet of dough, compress and stress the pasty mass until they damage its fibers.

An apparatus for extruding dough is known from Italian patent IT 1264933 by the same Applicant which is constituted by a supporting frame that has a supporting side for a feeding hopper into which a mass of dough to be extruded is placed and, in the following order, from the top downward, a pair of dosage-extractors arranged at the bottom of the hopper in order to extract the dough in a controlled manner from said hopper and, below the pair of dosage-extractors, at least one pair of oppositely rotating calibration or lamination cylinders.

Although this type of apparatus has considerable advantages, it does not make it possible to adjust practically and effectively the breadth of the compression chamber that is formed by the lateral surfaces of the dosage-extractors and by the pair of calibration cylinders arranged directly below.

The ribbon of dough is formed by shaping elements or extractors with actions of various kinds, such as tractions, compressions, squeezings, stretchings, pressures, calibrations, optionally vibrations, resting, etc.

In most cases, the shaping elements and/or extractors are of the rotating type, with a shape, material and size suitable for the dough being used, arranged appropriately on the apparatus and with such settings and speeds as to allow a continuous and regular formation process.

The parameters that most influence the process for forming the ribbon of dough are related to the forming elements of the machine: by way of example, the rotation rate of the rollers, the geometry of the rollers, the materials and the types of friction of the surfaces of the rollers, the position and number of the rotating elements involved, the presence or not of lubricants, the efficiency of the scraping devices, etc.

A correct definition of these parameters is essential in order to be able to obtain a regular and continuous ribbon of dough, which can be considered acceptable for feeding a dough lamination line of the industrial type.

Another aspect to be considered during the operations for forming a ribbon of dough is to try to avoid the presence of internal tensions, so as to ensure the obtainment of products that are constant in weight and shape.

For this reason it is necessary to try to eliminate, or at least limit drastically, all the braking actions to which the ribbon of dough is subject during its production process. Some of these braking actions are due to the adhesion of the dough to the fixed parts of the apparatus.

As a consequence of these braking actions, there are differences in flow between the parts of the ribbon that are in contact, for example with the lateral partitions, and its central parts, for which the flow is determined by the action of the formation devices or extractors.

These differences in flow cause, within the ribbon of dough, tensions that sometimes are difficult to eliminate and cause the ribbon to be uneven.

Their damaging effect is considerable especially in the end products of the production line and in some situations the effects on the finished products (shape and weight variations) are conspicuously detectable and quantifiable.

It is therefore highly important to be able to eliminate or minimize the actions of the braking forces.

US 5 824 349 A discloses a dough sheeter apparatus having a combination of features as set forth in the pre-characterizing portion of the appended claim 1.

The aim of the present invention is to eliminate or at least reduce drastically the drawbacks cited above in known types of apparatuses for extruding dough.

In particular, within this aim, an object of the present invention is to provide an apparatus for extruding dough that can be configured in an optimum manner for the type of dough to be extruded.

Another object of the present invention is to provide an apparatus for extruding dough that avoids the use of flour in the step of creating the ribbon of dough.

Another object of the invention is to devise an apparatus for extruding dough that makes it possible to reduce drastically the lateral tension with respect to the ribbon of dough, so as to ensure better uniformity thereof in output.

Not least object of the invention is to minimize the friction of the dough in transit against the lateral partitions of the compression chamber that accommodates the formation elements or extractors.

This aim, these objects and others that will become more apparent hereinafter are achieved by an apparatus for extruding dough according to what is indicated in appended claim 1.

Further characteristics and advantages of the present invention will become more apparent from the description of some preferred but not exclusive embodiments of an apparatus for extruding dough according to the invention, illustrated by way of non-limiting example in the accompanying drawings, wherein:

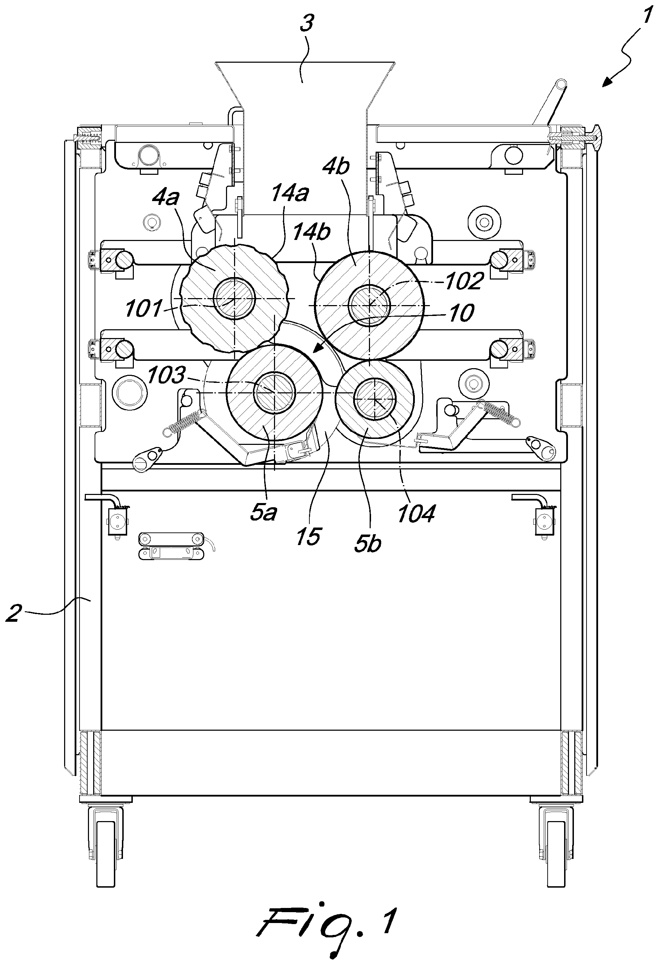

Figure 1 is a sectional lateral elevation view of an apparatus according to the invention;

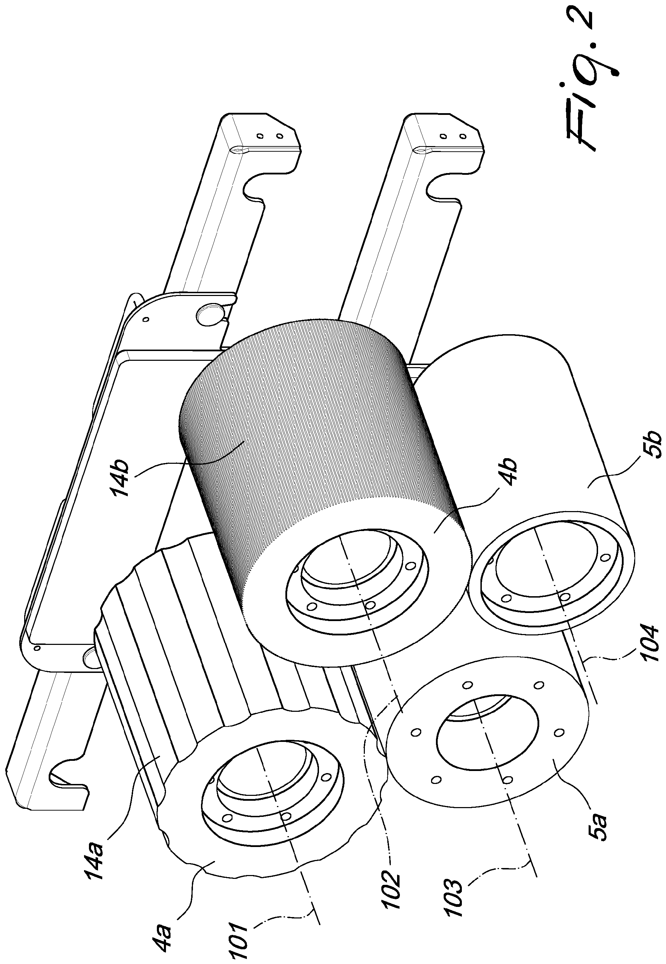

Figure 2 is a perspective view of the pair of extractors and of the pair of calibration cylinders;
Figure 3 is a view, similar to Figure 1, indicating the possibilities of movement of the extractors and of the calibration cylinders;
Figure 4 is an exploded perspective view of the apparatus according to the invention;
Figure 5 is a perspective view of the apparatus according to the invention;
Figure 6 is a side view of a lateral partition;
Figure 7 is a sectional view of the lateral partition along the plane of arrangement identified by the line VII-VII of Figure 6.

In the exemplary embodiments that follow, individual characteristics, given in relation to specific examples, may actually be interchanged with other different characteristics that exist in other exemplary embodiments.

With reference to the figures, the present invention relates to an apparatus, generally designated by the reference numeral 1, for extruding dough.

The apparatus comprises a supporting frame 2, a hopper 3 for feeding dough to be extruded, a pair of extractors 4a and 4b, which comprises a first extractor 4a and a second extractor 4b, and is arranged downstream of the feeder hopper 3.

Downstream of the pair of extractors there is at least one pair of calibration cylinders 5a and 5b.

The pair of calibration cylinders 5a and 5b comprises a first calibration cylinder 5a, which is arranged substantially below the first extractor 4a, and a second calibration cylinder 5b, which is arranged substantially below the second extractor 4b.

The pair of extractors 4a and 4b and the pair of calibration cylinders 5a and 5b have respective rotation axes (101, 102, 103, 104) which are substantially mutually parallel.

Conveniently, the calibration cylinder 5a is in a fixed position with respect to the supporting frame 2 and is provided with lateral flanges 15 for following the dough in the compression chamber, designated by the reference numeral 10 in the figures. The lateral flanges 15 further help to guide the dough in output from the compression chamber 10 and also to compact the ribbon of dough in output. Thanks to this operation, the ribbon in output has compacted and constant lateral edges.

According to the present invention, the apparatus 1 comprises first adjustment means 6, which are adapted to adjust the angular position of the rotation axis 101 of the first extractor 4a with respect to the rotation axis 103 of the first calibration cylinder 5a.

As already noted, advantageously the rotation axis 103 of the first calibration cylinder 5a is fixed with respect to the supporting frame 2.

The apparatus 1 is provided with second adjustment means 7 adapted to adjust the angular position of the rotation axis 104 of the second calibration cylinder 5b with respect to the rotation axis 102 of the second extractor 4b.

Advantageously, the apparatus 1 comprises third means 8 for adjusting the distance between the rotation axis 102 of the second extractor 4b and the rotation axis 103 of the first calibration element 5a, allowing consequently an adjustment of the extent of the compression chamber 10.

These third adjustment means 8 are adapted in particular to move the rotation axis 102 of the second extractor 4b along a substantially horizontal direction.

The actuation of the third adjustment means 8 would cause simultaneously a variation of the distance between the axes 102 of the second extractor and 101 of the first extractor.

However, control means are provided which are adapted to compensate this variation for example by means of the action of a servomotor.

The servomotor in fact, as a consequence of the operation on the third adjustment means 8, moves the rotation axis 101 of the first extractor 4a about the rotation axis 103 of the first calibration cylinder 5a, so as to keep fixed the distance between the rotation axes 101 and 102 of the extractors 4a and 4b.

One constructive variation adapted to allow a quick and effective variation of the extent of the compression chamber 10 while keeping unchanged the distance between the rotation axes 101 and 102 of the pair of extractors 4a and 4b provides for the presence of a connecting body 9 between the shanks of the pair of extractors 4a and 4b.

Conveniently, the connecting body 9 also can be provided with a manual or automated movement device that is adapted to make the rotation axis 101 of the first extractor 4a approach, on command, the rotation axis 102 of the second extractor 4b or to remove it from the same.

Conveniently, the pair of extractors 4a, 4b comprises cylindrical elements in which the side wall 14a, 14b is made of plastic material or stainless steel.

Specifically, the side wall 14a, 14b can also be made of an added layer of plastic material.

According to a preferred embodiment, the side wall 14a, 14b of the first and/or second extractors has a surface finish that is comprised in the group that comprises:
- a studded surface;
- a surface with longitudinal grooves;
- a smooth surface;
- a lobate surface;
- a surface having a polygonal transverse cross-section.

The apparatus 1 defines, below the feeding hopper 3, a dough compression chamber 10.

The dough compression chamber 10 is defined in an upper region by the extractors 4a and 4b, in a lower region by the calibration cylinders 5a and 5b, and laterally by the lateral flanges 15 that are integral with the cylinder 5a and by a pair of lateral partitions that extend substantially vertically at the longitudinal ends of the pair of extractors 4a, 4b and of the pair of calibration cylinders 5a, 5b.

According to a preferred embodiment, the lateral partitions are made of microporous steel.

The microporous material is the medium through which a flow of microfiltered pressurized air occurs.

This action generates a sort of air cushion, which does not allow the dough to adhere to the lateral partitions, thus eliminating any friction.

Inside the compression chamber 10 defined by the extractors 4a, 4b and by the calibration cylinders 5a, 5b, the dough is shaped and guided by the mechanical extrusion action of the extractors 4a, 4b and of the calibration cylinders 5a, 5b in motion.

Laterally, at the lateral partitions, friction is substantially eliminated, since the dough glides on the partitions, whereas in output it is subjected to the guiding action of the lateral flanges 15, which rotate synchronously with respect to the first calibration cylinder 5a.

Merely by way of example, the first adjustment means 6 can be constituted by a first linkage for connection between respective shanks of the first extractor 4a and of the first calibration cylinder 5a and means for moving on command, for example a first servomotor, said first connecting linkage about the rotation axis 103 of the first calibration cylinder 5a.

The second adjustment means 7 may be constituted further by a second linkage for connection between respective shanks of the second extractor 4b and of the second calibration cylinder 5 and means for movement on command, constituted for example by a second servomotor, of the second connecting linkage about the rotation axis 102 of the second extractor 4b.

As regards the third adjustment means 8, they can be constituted by slider means, which extend along a substantially horizontal direction and are provided with a base body that is integral with the supporting frame 2 and a movable body that is integral with the rotation axis 102 of the second extractor 4b.

As is known, the supporting frame 2 defines, below the pair or pairs of calibration cylinders 4a, 4b, a belt conveyor, which is designed to pick up and remove the extruded and laminated dough.

The pair of extractors 4a, 4b, as well as the pair of calibration cylinders 5a and 5b, rotate in mutually opposite directions.

The actuation of the extractors 4a, 4b can be independent of the actuation of the calibration cylinders 5a, 5b, in which case their peripheral speed is correlated to the type of dough that is used and to the mutual distance between the rollers.

According to a further aspect, the present invention relates to an apparatus, generally designated by the reference numeral 1, for extruding dough.

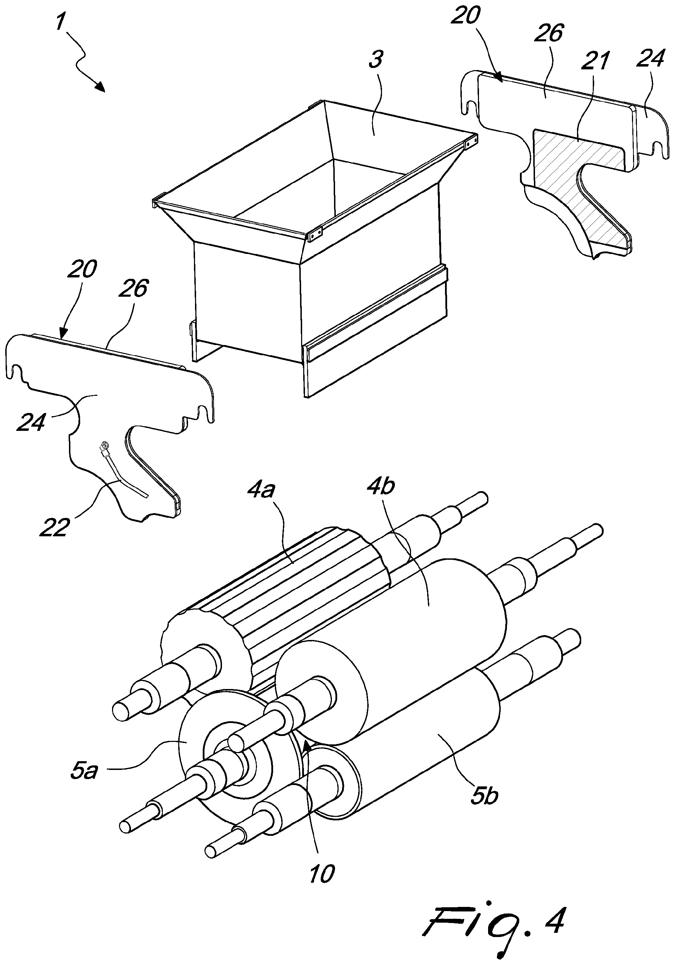

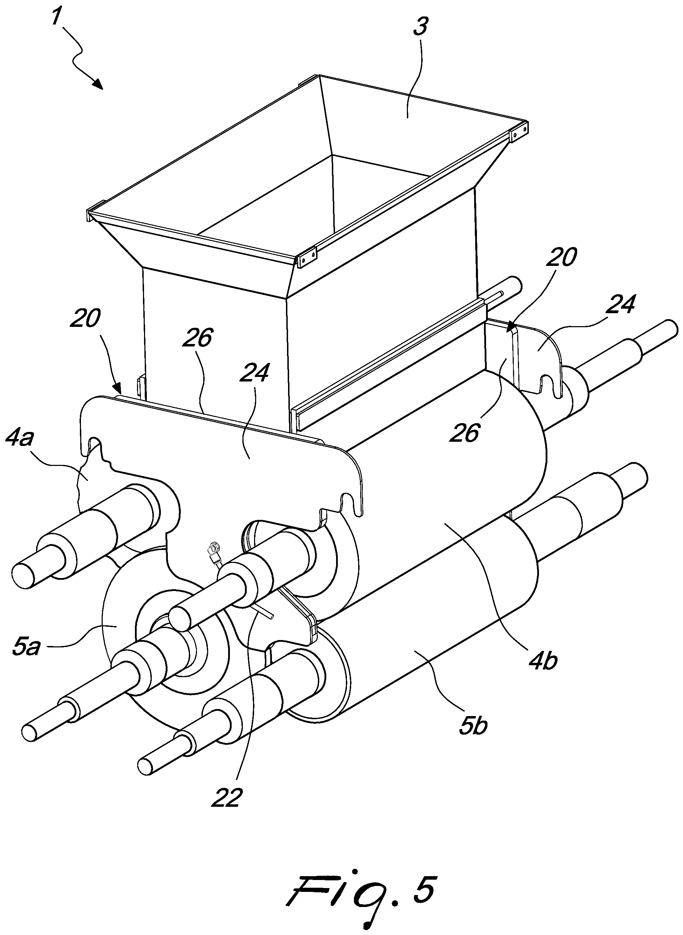

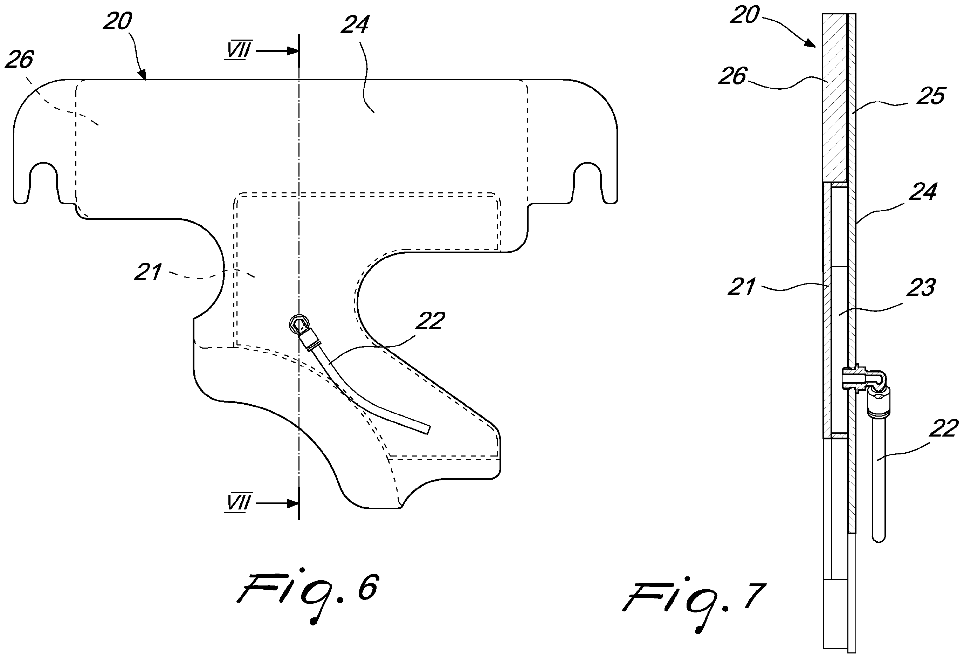

With particular reference to Figures 4 to 7, the apparatus 1 comprises a supporting frame 2, a hopper 3 for feeding dough to be extruded, and a dough compression chamber 10 arranged below the feeding hopper 3.

The compression chamber 10 accommodates at least one pair of extractors 4a, 4b, which comprises a first extractor 4a and a second extractor 4b.

According to the invention, the compression chamber 10 is delimited by at least one pair of lateral partitions 20 that extend substantially vertically at the longitudinal ends of the pair of extractors 4a, 4b.

The lateral partitions 20 have at least one portion 21 that is permeable to a fluid and is connected to means 22 for introducing the fluid toward the compression chamber 10 through the or each permeable portion 21.

According to the invention, the permeable portion 21 comprises microporous steel.

Advantageously, a respective chamber 23 for introducing a fluid is defined at each partition 20.

Each one of the intake chambers 23 is delimited, on its side directed toward the compression chamber 10, by at least one wall that is formed at least partially by the permeable portion 21.

According to the invention, the permeable portion 21 comprises a plate-like insert made of microporous steel.

According to a preferred embodiment, the permeable portion 21 is detachably coupled to the respective lateral partition 20.

The lateral partition 20 is detachably coupled to the supporting frame 2.

Advantageously, the fluid introduced in the intake chamber 23 and intended to pass through the permeable portion 21 comprises air.

The intake chamber 23 is connected, at its side 24 that lies opposite the permeable portion 21, to a fluid supply duct.

Conveniently, the apparatus 1 comprises means for adjusting the pressure of the air that is sent to the intake chamber 23.

The lateral partition 20 might comprise a supporting body 25 that is associated, on the side directed toward the compression chamber 10, with a plate-like element 26 made of plastic material that defines a receptacle for the plate-like insert or inserts.

Preferably, the plate-like element 26 made of plastic material is made of polythene.

The pressure of the air that is used and the degree of microporosity of the material of the permeable portion 21 must take into account the characteristics of adhesiveness of the dough and the thrusts that occur in the respective compression chamber 10.

Below the extractors 4a, 4b there can be one or more pairs, or a train, of calibration cylinders 5a, 5b.

The permeable portions 21 are arranged at regions that extend at the longitudinal ends of the calibration cylinders 5a, 5b.

In some applications it is further possible to provide for the use of lateral partitions 20 provided with permeable portions 21 that are arranged exclusively at the longitudinal ends of the calibration cylinders 5a, 5b.

Operation of the apparatus 1 according to the invention is evident from what has been described above.

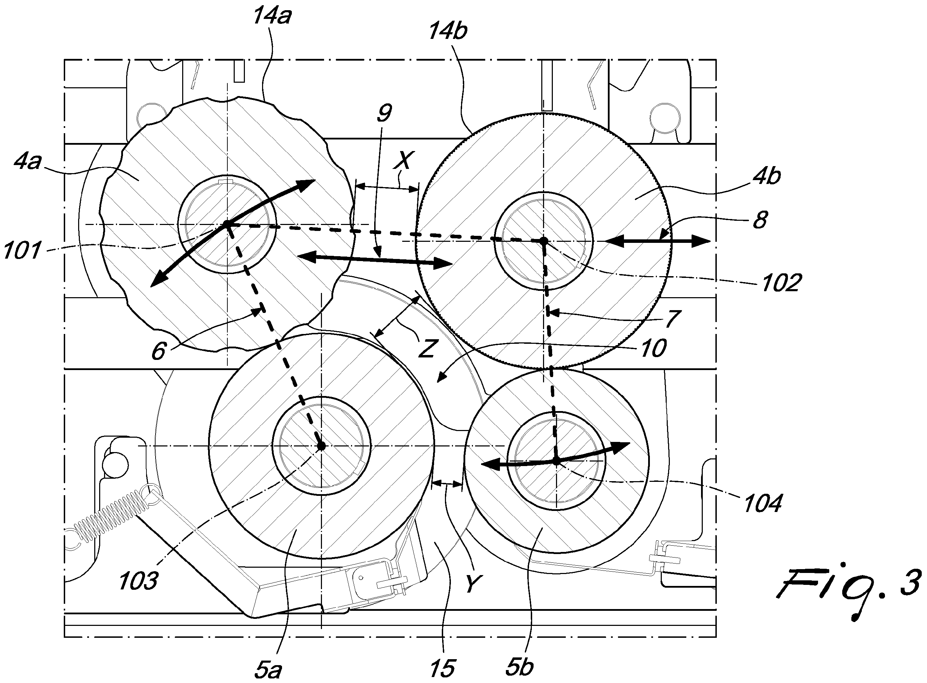

Concerning the possibility of intervening with the configuration of the apparatus 1, the possibility is noted of adjusting in an extremely practical manner:
- the distance between the first extractor 4a and the second extractor 4b (distance designated by X in Figure 3);
- the distance between the first calibration cylinder 4a and the second extractor 4b (distance designated by Z in Figure 3);
- the distance between the first calibration cylinder 5a and the second calibration cylinder 5b (distance designated by Y in Figure 3).

The adjustment of these distances (and accordingly of the extent of the compression chamber 10) is performed automatically by means of electric servomotors.

Thanks to the presence of the first connecting linkage and of the second connecting linkage, the correction of one of the three distances (X, Y and Z) causes automatically the placement of the extractors 4a and 4b and of the calibration cylinders 5a, 5b so as to keep the other two distances unchanged.

This adjustment system makes it possible to find the most suitable position of the extractors 4a and 4b and of the calibration cylinders 5a and 5b in relation to the type of dough in use.

The distances indicated by X and Y are usually defined on the basis of the best possible dough entry (grip capability and emptying of the feeder hopper 3) and of the dough thickness that is needed in output.

The adjustment of the distance Z allows a wide possibility of actions in relation to the type of dough being used: in particular, thanks to this adjustment it becomes possible to vary significantly the extent of the compression chamber 10, thus being able to perform an additional compacting operation on the dough inside the compression chamber 10.

By having a greater possibility of adjustment of the distance Z, it is possible to vary considerably the dimensions, shape and position of the compression chamber 10.

In this manner it is possible to find the ideal adjustment for every type of dough by increasing or decreasing, as needed, the compactness of the dough.

This possibility allows greater uniformity of the dough ribbon in output, with significant benefits on uniformity of weights at the end of the line.

Moreover, the apparatus 1 allows an axial offset of the position of the compression chamber 10 with respect to the axially aligned position.

This ensures better support for soft or very liquid doughs and in any case helps to eliminate tensions inside the dough caused by gravity.

Moreover, the extractors 4a and 4b optionally covered with plastic material may render it unnecessary to use flour during the creation of the ribbon of dough.

This advantage, in addition to the obvious economic savings and the elimination of various problems linked to flour (safety for operator health, reduced need for cleaning, etc.), determines considerable advantages on the uniformity of the ribbon of dough that is created.

Moreover, by operating on the shape of the surface of the rollers (smooth, studded or with particular grooves), one provides, in addition to the advantages described above, further possibilities of varying the grip on the dough, with consequent benefits determined by higher possible pressures on the compression chamber 10 and consequent effects such as the compactness and porosity of said dough.

The provision of the lateral partitions by using microporous material, finally, makes it possible to reduce drastically the lateral tensions with respect to the ribbon of dough and ensures better uniformity thereof in output.

The resulting benefits leads to more constant weights at the end of the line.

Tests that have been conducted have in fact shown that the use of lateral partitions 20 that have the portion 21 that is permeable to a fluid, for example air, allows to achieve significant improvements with respect to the methods used traditionally to reduce friction (for example by using inserts made of plastic material with a low friction coefficient or Teflon coating treatments).

At the same time, the invention allows to avoid the use of lubricants or other liquids or powders within the machine to facilitate the outflow of the dough.

In practice, the friction of the dough on the lateral partitions 20 is reduced drastically, utilizing the principle of permeability of the permeable portion 21, for example the microporous steel insert, by injecting compressed air.

The air, by exiting through the micropores defined at the permeable portion 21, creates between the dough and the respective lateral partition 20 a film of air that avoids the adhesions and penetrations of the dough, leaving its outflow substantially unhindered.

Although sticking or infiltration of the dough at the permeable portion 21 have not been detected experimentally, said portion 21, as well as the lateral partitions 20, can be easily removed and disassembled so as to allow quick interventions for cleaning and sanitizing.

All the characteristics of the invention indicated above as advantageous, convenient or the like may also be omitted or be replaced with equivalents.

The invention thus conceived is susceptible of numerous modifications and variations, all of which are within the scope of the appended claims.

In practice it has been found that in all its embodiments, the invention has achieved the intended aim and objects. In practice, the materials used, as well as the dimensions, may be any according to the requirements.

All the details may further be replaced with other technically equivalent elements.

The disclosures in Italian Patent Application No. VR2012A000188 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (1) for extruding dough, comprising a supporting frame (2), a hopper (3) for feeding dough to be extruded, a chamber (10) for compressing the dough located below said feeding hopper (3) and accommodating at least one pair of extractors (4a, 4b), which comprises a first extractor (4a) and a second extractor (4b), and at least one pair of calibration cylinders (5a, 5b) arranged downstream of said pair of extractors (4a, 4b), which comprises a first calibration cylinder (5a) arranged substantially below said first extractor (4a) and a second calibration cylinder (5b) arranged substantially below said second extractor (4b), said compression chamber (10) being delimited by at least one pair of lateral partitions (20) that extends substantially vertically at the longitudinal ends of said pair of extractors (4a, 4b), said lateral partitions (20) having at least one portion (21) that is permeable to a fluid and is connected to means (22) for introducing said fluid toward said compression chamber (10) through said at least one permeable portion (21), **characterized in that** said permeable portion (21) comprises a plate-like insert made of microporous steel arranged at the longitudinal ends of said pair of extractors (4a, 4b) and at regions that extend at the longitudinal ends of said calibration cylinders (5a, 5b).

2. The apparatus (1) according to claim 1, **characterized in that** at each one of said lateral partitions (20) there is a respective fluid intake chamber (23), each one of said intake chambers (23) being delimited, on its side directed toward said compression chamber (10), by at least one wall that is provided at least partially by said permeable portion (21).

3. The apparatus (1) according to one or more of the preceding claims, **characterized in that** said at least one permeable portion (21) is adapted to reduce the sliding friction of the dough against the respective lateral partition (20).

4. The apparatus (1) according to one or more of the preceding claims, **characterized in that** said permeable portion (21) is detachably coupled to said lateral partition (20).

5. The apparatus (1) according to one or more of the preceding claims, **characterized in that** said lateral partition (20) is detachably coupled to said supporting frame (2).

6. The apparatus (1) according to one or more of the preceding claims, **characterized in that** said fluid comprises air.

7. The apparatus (1) according to claim 2, **characterized in that** said intake chamber (23) is connected, at its side (24) that is opposite to said permeable portion (21), to a duct for supplying said fluid.

8. The apparatus (1) according to claim 2, **characterized in that** it comprises means for adjusting the pressure of the fluid sent to said intake chamber (23).

9. The apparatus (1) according to one or more of the preceding claims, **characterized in that** each of said lateral partitions (20) comprises a supporting body (24) which is associated, on the side directed toward said compression chamber (10), with a plate-like element (26) made of plastic material, which defines a receptacle for said at least one plate-like element.

10. The apparatus (1) according to claim 9, **characterized in that** said plate-like element (26) made of plastic material is made of polythene.

## Patentansprüche

1. Eine Vorrichtung (1) zum Extrudieren von Teig, die Folgendes umfasst: einen Tragrahmen (2), einen Trichter (3) zum Einfüllen von zu extrudierendem Teig, eine Kammer (10) zum Komprimieren des Teigs, die sich unterhalb des Fülltrichters (3) befindet und mindestens ein Paar von Abziehern (4a, 4b) enthält, das einen ersten Abzieher (4a) und einen zweiten Abzieher (4b) umfasst, und mindestens ein Paar von Kalibrierzylindern (5a, 5b), stromabwärts von dem Paar von Abziehern (4a, 4b) angeordnet, das einen ersten Kalibrierzylinder (5a), im Wesentlichen unterhalb des ersten Abziehers (4a) angeordnet, und einen zweiten Kalibrierzylinder (5b), im Wesentlichen unterhalb des zweiten Abziehers (4b) angeordnet, umfasst, wobei die Kompressionskammer (10) von mindestens einem Paar seitlicher Trennwände (20) begrenzt ist, das sich im Wesentlichen vertikal an den Längsenden des Paares von Abziehern (4a, 4b) erstreckt, wobei die seitlichen Trennwände (20) mindestens einen Abschnitt (21) haben, der durchlässig für ein Fluid und mit Mitteln (22) zum Einführen des Fluids zu der Kompressionskammer (10) hin durch den mindestens einen durchlässigen Abschnitt (21) verbunden ist, **dadurch gekennzeichnet, dass** der durchlässige Abschnitt (21) einen plattenähnlichen Einsatz aus mikroporösem Stahl umfasst, angeordnet an den Längsenden des Paares von Abziehern (4a, 4b) und an Bereichen, die sich an den Längsenden der Kalibrierzylinder (5a, 5b) erstrecken.

2. Die Vorrichtung (1) gemäß Anspruch 1, **dadurch gekennzeichnet, dass** sich an jeder der seitlichen Trennwände (20) eine entsprechende Fluideinlasskammer (23) befindet, wobei jede der Einlasskammern (23) an ihrer Seite, die zu der Kompressionskammer (10) hin gerichtet ist, von mindestens einer Wand begrenzt ist, die zumindest teilweise von dem durchlässigen Abschnitt (21) gebildet wird.

3. Die Vorrichtung (1) gemäß einem oder mehreren der obigen Ansprüche, **dadurch gekennzeichnet, dass** der mindestens eine durchlässige Abschnitt (21) ausgebildet ist, um die Gleitreibung des Teigs gegen die jeweilige seitliche Trennwand (20) zu vermindern.

4. Die Vorrichtung (1) gemäß einem oder mehreren der obigen Ansprüche, **dadurch gekennzeichnet, dass** der durchlässige Abschnitt (21) lösbar mit der seitlichen Trennwand (20) gekoppelt ist.

5. Die Vorrichtung (1) gemäß einem oder mehreren der obigen Ansprüche, **dadurch gekennzeichnet, dass** die seitliche Trennwand (20) lösbar mit dem Tragrahmen (2) gekoppelt ist.

6. Die Vorrichtung (1) gemäß einem oder mehreren der obigen Ansprüche, **dadurch gekennzeichnet, dass** das Fluid Luft umfasst.

7. Die Vorrichtung (1) gemäß Anspruch 2, **dadurch gekennzeichnet, dass** die Einlasskammer (23) an ihrer Seite (24), die dem durchlässigen Abschnitt (21) gegenüberliegt, mit einer Leitung für die Zufuhr des Fluids verbunden ist.

8. Die Vorrichtung (1) gemäß Anspruch 2, **dadurch gekennzeichnet, dass** sie Mittel zum Einstellen des Drucks des Fluids umfasst, das zu der Einlasskammer (23) geleitet wird.

9. Die Vorrichtung (1) gemäß einem oder mehreren der obigen Ansprüche, **dadurch gekennzeichnet, dass** jede der seitlichen Trennwände (20) einen tragenden Körper (24) umfasst, welcher an der Seite, die der Kompressionskammer (10) zugewandt ist, mit einem plattenähnlichen Element (26) aus Kunststoffmaterial verbunden ist, das eine Aufnahme für das mindestens eine plattenähnliche Element bestimmt.

10. Die Vorrichtung (1) gemäß Anspruch 9, **dadurch gekennzeichnet, dass** das plattenähnliche Element (26), das aus Kunststoffmaterial hergestellt ist, aus Polyethylen besteht.

## Revendications

1. Appareil (1) pour extruder une pâte, comprenant un bâti de support (2), une trémie (3) pour délivrer une pâte devant être extrudée, une chambre (10) pour comprimer la pâte disposée en dessous de ladite trémie de délivrance (3) et recevoir au moins une paire d'extracteurs (4a, 4b), qui comprend un premier extracteur (4a) et un deuxième extracteur (4b), et au moins une paire de cylindres de calibration (5a, 5b) disposés en aval de ladite paire d'extracteurs (4a, 4b), qui comprend un premier cylindre de calibration (5a) disposé sensiblement en dessous dudit premier extracteur (4a) et un deuxième cylindre de calibration (5b) disposé sensiblement en dessous dudit deuxième extracteur (4b), ladite chambre de compression (10) étant délimitée par au moins une paire de séparations latérales (20) qui s'étendent sensiblement verticalement aux extrémités longitudinales de ladite paire d'extracteurs (4a, 4b), lesdites séparations latérales (20) comportant au moins une partie (21) qui est perméable à un fluide et qui est reliée à des moyens (22) pour introduire ledit fluide vers ladite chambre de compression (10) par l'intermédiaire de ladite partie perméable au nombre d'au moins une (21), **caractérisé en ce que** ladite partie perméable (21) comprend un insert en forme de plaque réalisé en acier microporeux disposé aux extrémités longitudinales de ladite paire d'extracteurs (4a, 4b) et en des régions qui s'étendent aux extrémités longitudinales desdits cylindres de calibration (5a, 5b).

2. Appareil (1) selon la revendication 1, **caractérisé en ce que**, au niveau de chacune desdites séparations latérales (20), se trouve une chambre d'admission de fluide respective (23), chacune desdites chambres d'admission (23) étant délimitée, sur son côté dirigé vers ladite chambre de compression (10), par au moins une paroi qui est constituée au moins partiellement par ladite partie perméable (21).

3. Appareil (1) selon l'une ou plusieurs des revendications précédentes, **caractérisé en ce que** ladite partie perméable au nombre d'au moins une (21) est adaptée de façon à réduire le flottement de glissement de la pâte contre la séparation latérale respective (20).

4. Appareil (1) selon l'une ou plusieurs des revendications précédentes, **caractérisé en ce que** ladite partie perméable (21) est couplée de façon détachable à ladite séparation latérale (20).

5. Appareil (1) selon l'une ou plusieurs des revendications précédentes, **caractérisé en ce que** ladite séparation latérale (20) est couplée de façon détachable audit bâti de support (2).

6. Appareil (1) selon l'une ou plusieurs des revendications précédentes, **caractérisé en ce que** ledit fluide comprend de l'air.

7. Appareil (1) selon la revendication 2, **caractérisé en ce que** ladite chambre d'admission (23) est reliée, au niveau de son côté (24) qui est opposé à ladite partie perméable (21), à un conduit pour délivrer ledit fluide.

8. Appareil (1) selon la revendication 2, **caractérisé en ce qu'**il comprend des moyens pour ajuster la pression du fluide envoyé à ladite chambre d'admission (23).

9. Appareil (1) selon l'une ou plusieurs des revendications précédentes, **caractérisé en ce que** chacune desdites séparations latérales (20) comprend un corps de support (24) qui est associé, sur le côté dirigé vers ladite chambre de compression (10), à un élément en forme de plaque (26) réalisé en matière plastique, qui définit un réceptacle pour ledit élément en forme de plaque au nombre d'au moins un.

10. Appareil (1) selon la revendication 9, **caractérisé en ce que** ledit élément en forme de plaque (26) réalisé en matière plastique est réalisé en polythène.
